# FASCICULE DE BREVET EUROPEEN

(11) **EP 3 891 768 B1**
(45) Date de publication et mention de la délivrance du brevet: **28.05.2025**
(21) Numéro de dépôt: 19842374.1
(22) Date de dépôt: 25.11.2019
(51) Int. Cl.: H01G 4/12, H01G 4/18, H01G 4/40, H01R 13/64, H01R 13/66, H01R 13/00

(54) **DISPOSITIF DE COUPLAGE À PIÈCES ASSURANT UN COUPLAGE ENTRE UNE LIAISON ÉLECTRIQUE ET UN ÉLÉMENT CONDUCTEUR**
KOPPLUNGSVORRICHTUNG MIT BAUTEILE ZUR KOPPLUNG EINER ELEKTRISCHEN VERBINDUNG UND EINEM LEITFÄHIGEN ELEMENT
COUPLING DEVICE WITH PARTS COUPLING AN ELECTRICAL CONNECTION AND A CONDUCTING ELEMENT

(30) Priorité: 03.12.2018 FR 1872209
(43) Date de publication de la demande: 13.10.2021
(73) Titulaire: Stellantis Auto SAS, 78300 Poissy (FR)
(72) Inventeur: KLINGLER, Marco, 92220 Bagneux (FR)
(74) Mandataire: ESIP
(86) Numéro de dépôt international: PCT/FR2019/052800
(87) Numéro de publication internationale: WO 2020/115398

(56) Documents cités:
- CN-A- 107 808 818
- US-A- 5 815 373
- US-A- 6 040 983
- US-A1- 2004 113 717
- US-A1- 2007 194 526

## Description

### Domaine technique de l'invention

L'invention concerne le couplage électrique d'une liaison électrique à un élément conducteur électriquement.

### Etat de la technique

US 5 815 373 A divulgue un dispositif de couplage pour coupler électriquement une liaison électrique à un élément conducteur électriquement, le dispositif comprenant une première pièce isolante électriquement et présentant une première surface destinée à être placée contre ledit élément, une épaisseur et une valeur diélectrique, et une seconde pièce conductrice électriquement, présentant une seconde surface placée au moins en partie contre ladite première pièce, et destinée à contacter physiquement ladite liaison électrique et à définir avec ladite première pièce et ledit élément un ensemble de type capacitif ayant une capacité équivalente fonction de ladite seconde surface, de ladite épaisseur et de ladite valeur diélectrique. CN 107 808 818 A divulgue des condensateurs flexibles. Certains systèmes, comme par exemple certains véhicules (éventuellement automobiles), comprennent un équipement électrique (ou électronique) connecté à une liaison électrique qui est couplée électriquement à un élément conducteur électriquement afin de raccorder électriquement son potentiel électrique à ce dernier élément. A titre d'exemple, la liaison électrique peut être destinée à assurer une mise à la masse électrique (éventuellement de référence) de l'équipement électrique au sens courant alternatif. Egalement à titre d'exemple, la liaison électrique peut être un fil électrique (éventuellement constitué d'au moins deux sous-parties se prolongeant mutuellement, par exemple au niveau d'une épissure) ou un blindage d'un câble électrique.

Actuellement, le couplage électrique entre une liaison électrique et un élément se fait généralement au moyen de cosse(s) et point(s) de masse, ou par contact vissé, ou par sertissage, ou par insertion entre connecteurs, ou encore par soudage. Tous ces couplages électriques nécessitent d'adapter et/ou d'équiper l'extrémité de couplage de la liaison électrique et/ou d'adapter et/ou d'équiper l'élément et/ou de mettre en œuvre au moins une opération de couplage (vissage, clippage, sertissage ou soudage), ce qui s'avère onéreux et/ou chronophage et/ou contraignant (notamment pour les lieux de couplage).

Par ailleurs, la masse associée à l'équipement électrique connecté à la liaison électrique, la liaison électrique et l'élément (définissant éventuellement une masse de référence), peuvent constituer respectivement des parties d'une boucle de masse dans laquelle circule un courant parasite ayant une fréquence qui peut entrer en résonance avec au moins une fréquence dite de résonance. Or, comme le sait l'homme de l'art, la circulation de ce courant parasite dans une boucle de masse peut engendrer un rayonnement induisant des perturbations électromagnétiques pénalisantes pour certaines fonctions, comme par exemple la réception d'ondes radioélectriques. Par conséquent, en présence des couplages électriques précités, certaines bandes de fréquences (par exemple critiques pour la réception d'ondes radioélectriques) peuvent être plus ou moins impactées d'un système à un autre ou d'une déclinaison d'un système à une autre déclinaison de ce même système, en raison de leurs différences. On est alors contraint d'introduire des dispositifs de protection additionnels, comme par exemple un composant de filtrage sur la liaison électrique, ou un élément filaire (ou « stub ») adaptant l'impédance en fonction de sa longueur à l'extérieur de l'équipement électrique connecté à la liaison électrique, ou encore des composants électriques résistifs, inductifs et/ou capacitifs à l'intérieur de l'équipement électrique connecté à la liaison électrique. Mais l'implantation de tels dispositifs de protection additionnels augmente les coûts et l'encombrement et de surcroît n'est pas toujours possible (notamment lorsque l'environnement est encombré).

L'invention a donc notamment pour but d'améliorer la situation.

### Présentation de l'invention

Elle propose notamment à cet effet un dispositif de couplage tel que défini par la revendication 1, destiné à coupler électriquement une liaison électrique à un élément conducteur électriquement. Ce dispositif de couplage se caractérise par le fait qu'il comprend :
- une première pièce isolante électriquement et présentant une première surface destinée à être placée contre l'élément, une épaisseur et une valeur diélectrique, et
- une seconde pièce conductrice électriquement, présentant une seconde surface placée au moins en partie contre la première pièce, et destinée à contacter physiquement la liaison électrique et à définir avec la première pièce et l'élément un ensemble de type capacitif ayant une capacité équivalente fonction de cette seconde surface, de cette épaisseur et de cette valeur diélectrique.

Dans ce qui suit et ce qui précède on entend par « pièce isolante électriquement » une pièce ayant une conductivité très faible par rapport à ses autres caractéristiques électriques (et notamment diélectrique).

Ainsi, on n'a plus besoin d'adapter et/ou d'équiper l'extrémité de couplage de la liaison électrique et/ou d'adapter et/ou d'équiper l'élément et/ou de mettre en œuvre une opération de vissage, sertissage ou soudage.

Le dispositif de couplage selon l'invention peut comporter d'autres caractéristiques qui peuvent être prises séparément ou en combinaison, et notamment :
- sa première pièce et sa seconde pièce peuvent être planes ;
- la seconde surface peut être plus petite que la première surface ;
   ➢ la seconde surface peut être placée entièrement contre sa première pièce ;
- la seconde surface de sa seconde pièce peut être solidarisée fixement, au moins en partie, à sa première pièce.

L'invention propose également un agencement tel que défini par la revendication 6, comprenant des première et seconde extrémités opposées, la première extrémité étant destinée à être connectée à un équipement électrique (ou électronique). Cette liaison électrique se caractérise par le fait qu'elle comprend également au moins un dispositif de couplage du type de celui présenté ci-avant, solidarisé fixement à sa seconde extrémité et destiné à être couplé à un élément conducteur électriquement.

Par exemple, l'agencement peut comprendre au moins un composant électrique ou électronique.

L'invention propose également un système tel que défini par la revendication 7, comprenant un équipement électrique (ou électronique) et un élément conducteur électriquement, et au moins une liaison électrique du type de celle présentée ci-avant et couplant cet équipement électrique à cet élément.

Ce système constitue un véhicule, éventuellement de type automobile.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement dans une vue en perspective un exemple de réalisation d'un dispositif de couplage selon l'invention assurant le couplage électrique entre une liaison électrique et un élément conducteur électriquement, et
[Fig. 2] illustre le schéma électrique auquel équivaut l'ensemble comprenant les dispositif de couplage, liaison électrique et élément conducteur électriquement de la figure 1.

### Description détaillée de l'invention

L'invention a notamment pour but de proposer un dispositif de couplage DC destiné à coupler électriquement une liaison électrique LE à un élément EC conducteur électriquement.

Dans ce qui suit, on considère que la liaison électrique LE et l'élément EC font partie d'un système constituant un véhicule. Des applications différentes seraient envisageables, qui pourraient concerner tout type de système (y compris les satellites), appareil électrique ou électronique (éventuellement électroménager, et y compris les téléphones mobiles intelligents (ou « smartphones ») et les tablettes électroniques communicantes), dispositif électrique ou électronique, installation (éventuellement industrielle), et bâtiment.

De plus, on considère dans ce qui suit, à titre d'exemple non limitatif, que le véhicule est de type automobile. Il s'agit par exemple d'une voiture. Mais l'invention n'est pas limitée à ce type de véhicule. Elle concerne en effet tout type de véhicule, qu'il soit terrestre, maritime (ou fluvial) ou aérien.

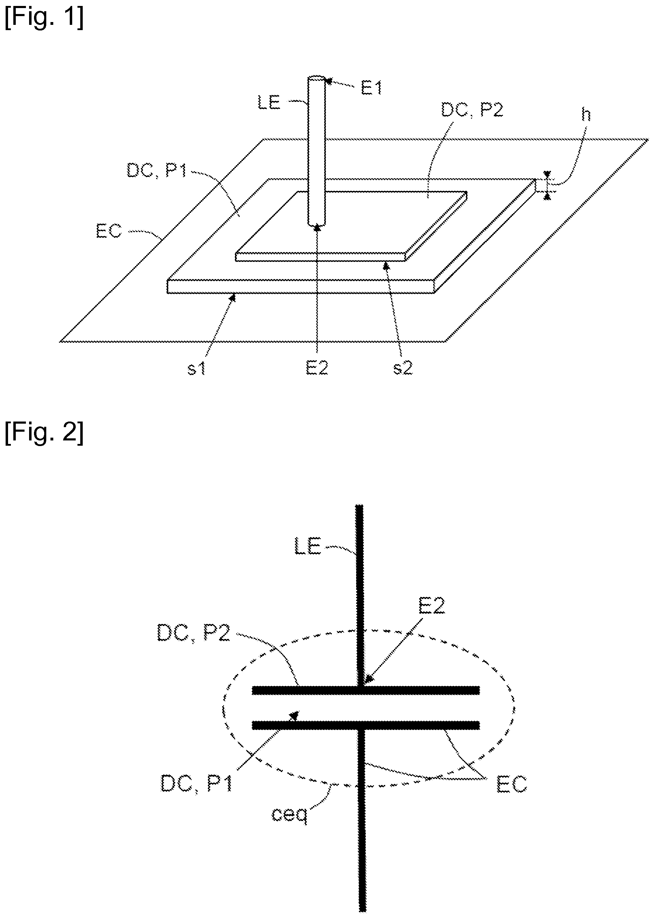

On a schématiquement représenté sur la figure 1 un exemple de réalisation d'un dispositif de couplage DC selon l'invention assurant le couplage électrique entre une liaison électrique LE et un élément EC conducteur électriquement.

A titre d'exemple, lorsque le système est un véhicule automobile, l'élément EC (conducteur électriquement) peut être une partie de la carrosserie métallique ou d'une structure métallique (comme par exemple une traverse supportant une planche de bord). Lorsque le système est un engin aérospatial (ou aéronef), l'élément EC (conducteur électriquement) peut, par exemple, être une partie du fuselage. Lorsque le système est un bateau, l'élément EC (conducteur électriquement) peut, par exemple, être une partie de la structure métallique de la coque.

Egalement à titre d'exemple, la liaison électrique LE peut être un fil électrique (éventuellement constitué d'au moins deux sous-parties se prolongeant mutuellement, par exemple au niveau d'une épissure), ou un blindage d'un câble électrique, ou encore une tige métallique (éventuellement flexible, ou présentant éventuellement au moins une courbure).

Cette liaison électrique LE comprend des première E1 et seconde E2 extrémités opposées. La première extrémité E1 est destinée à être (ou est) connectée à un équipement électrique (ou électronique) afin de raccorder électriquement le potentiel électrique de ce dernier à l'élément EC, via le dispositif de couplage DC. A titre d'exemple, la liaison électrique LE peut être destinée à assurer une mise à la masse électrique (éventuellement de référence) de son équipement électrique au sens courant alternatif. Egalement à titre d'exemple, l'équipement électrique peut être une machine (ou un moteur) électrique. Mais il pourrait s'agir de n'importe quel dispositif ou appareil électrique ou électronique.

On notera que la liaison électrique LE peut éventuellement comprendre au moins un composant électrique ou électronique, comme par exemple une résistance, un condensateur, une inductance, ou un semi-conducteur. Un tel composant peut équiper une partie intermédiaire et/ou au moins l'une des première E1 et seconde E2 extrémités d'une liaison électrique LE. On notera également que la première extrémité E1 d'une liaison électrique LE peut éventuellement être équipée d'un connecteur, par exemple de type « banane » ou « crocodile ».

Comme illustré sur la figure 1, un dispositif de couplage DC, selon l'invention, comprend des première P1 et seconde P2 pièces.

La première pièce P1 est isolante électriquement et présente une première surface s1 qui est destinée à être placée contre l'élément EC. On entend ici par « contre » le fait d'être en contact étroit avec, ou d'être plaquée sur, une surface (d'une partie) de l'élément EC.

De plus, cette première pièce P1 présente une épaisseur h et une valeur diélectrique (c'est-à-dire une permittivité diélectrique).

Par exemple, cette première pièce P1 peut être réalisée dans un matériau tel que le polytétrafluoroéthylène (ou PTFE) ou un plastique ou une céramique.

La seconde pièce P2 est conductrice électriquement et présente une seconde surface s2 qui est placée au moins en partie contre la première pièce P1. On entend ici par « contre » le fait d'être en contact étroit avec, ou d'être plaquée sur, une surface (d'une partie au moins) de la première pièce P1.

Par exemple, cette seconde pièce P2 peut être réalisée dans un matériau métallique tel que le cuivre, l'aluminium, le laiton, le zinc ou l'or.

De plus, cette seconde pièce P2 est destinée à contacter physiquement la liaison électrique LE et à définir avec la première pièce P1 et l'élément EC un ensemble de type capacitif ayant une capacité équivalente ceq qui est fonction de la (valeur de la) seconde surface s2, de l'épaisseur h et de la valeur diélectrique de la première pièce P1.

Sur la figure 2 se trouve illustré le schéma électrique auquel équivaut pour l'homme de l'art l'ensemble comprenant le dispositif de couplage DC, la liaison électrique LE et l'élément EC de la figure 1.

Grâce au dispositif de couplage DC selon l'invention, on n'a plus besoin d'adapter et/ou d'équiper la seconde extrémité E2 (de couplage) de la liaison électrique LE et/ou d'adapter et/ou d'équiper l'élément EC et/ou de mettre en œuvre une opération de vissage, sertissage ou soudage, ce qui permet non seulement de réduire les coûts et le temps nécessaire au couplage, mais également de réduire notablement les contraintes d'implantation.

Par ailleurs, le dispositif de couplage DC permet avantageusement d'empêcher la circulation d'un courant continu de la liaison électrique LE vers l'élément EC (en raison de l'effet capacitif assuré par l'ensemble (LE, DC, EC)), et de ne laisser circuler qu'un courant variant dans le temps avec une vitesse de variation suffisamment élevée pour que l'impédance de la capacité équivalente ceq puisse être considérée comme faible. On notera cependant que cette particularité d'empêcher la circulation d'un courant continu n'est pas une condition nécessaire à l'utilisation du dispositif de couplage DC.

On notera également, comme illustré non limitativement sur la figure 1, que la première pièce P1 et la seconde pièce P2 peuvent être planes. Mais cela n'est pas obligatoire. En effet, elles peuvent être courbes (en présentant au moins une courbure). Ce qui est important, c'est qu'elles puissent épouser la forme de la partie de la surface de l'élément EC contre laquelle elles sont placées ou plaquées (directement pour P1 et indirectement pour P2 (via P1)).

La première et la seconde pièces sont souples (ou flexibles) ou plus généralement déformables, afin de pouvoir facilement épouser la forme de la partie de la surface de l'élément EC contre laquelle elles sont placées ou plaquées (directement pour P1 et indirectement pour P2 (via P1)).

On notera également, comme illustré non limitativement sur la figure 1, que la seconde surface s2 peut être plus petite que la première surface s1. Mais cela n'est pas obligatoire. En effet, la seconde surface s2 peut être plus grande que la première surface s1, mais dans ce cas elle (s2) ne doit pas contacter l'élément EC. Cette absence de contact peut notamment être obtenue lorsque les première P1 et seconde P2 pièces sont rigides.

Lorsque la seconde surface s2 est plus petite que, ou égale à, la première surface s1, la seconde surface s2 peut être placée entièrement contre la première pièce P1, comme illustré non limitativement sur la figure 1. Mais cela n'est pas obligatoire. En effet, on peut envisager que la seconde surface s2 soit plus petite que la première surface s1, mais qu'elle déborde partiellement de cette dernière (s1), bien entendu sans contacter l'élément EC. On peut aussi envisager que la seconde surface s2 soit égale à la première surface s1, mais qu'elle déborde partiellement de cette dernière (s1), bien entendu sans contacter l'élément EC.

On notera également que la seconde surface s2 de la seconde pièce P2 peut être solidarisée fixement, au moins en partie, à la première pièce P1. Cette solidarisation fixe peut par exemple se faire au moyen d'une colle ou d'une bande adhésive double face. Mais cela n'est pas obligatoire. En effet, on peut envisager que la seconde surface s2 de la seconde pièce P2 soit seulement plaquée étroitement, au moins en partie, contre la première pièce P1, en même temps que cette dernière (P1) est plaquée étroitement contre l'élément EC, par exemple par serrage par pression (au moyen, par exemple, de collier(s), de lien(s) flexible(s), d'élastique(s), ou de ruban(s) adhésif(s)). Dans ce dernier cas, la seconde pièce P2 est placée contre la première pièce P1 lorsque l'on décide de coupler le dispositif de couplage DC à un élément EC.

On peut également envisager que la première surface s1 de la première pièce P1 soit préalablement solidarisée (éventuellement fixement) à un élément EC, par exemple par collage, et que la seconde pièce P2 soit préalablement solidarisée fixement à une liaison électrique LE. Dans ce cas, la seconde pièce P2 est placée contre la première pièce P1 lorsque l'on décide de coupler la liaison électrique LE à l'élément EC.

On notera également que la seconde extrémité E2 d'une liaison électrique LE peut être solidarisée fixement à une seconde pièce P2 par tout moyen, et notamment par soudage ou via une connectique appropriée.

On notera également qu'une liaison électrique LE peut, avant d'équiper un équipement électrique (faisant éventuellement partie d'un système), présenter sa seconde extrémité E2 solidarisée fixement à la seconde pièce P2 d'un dispositif de couplage DC, à laquelle est solidarisée fixement la première pièce P1 de ce dernier (DC). Dans ce cas, on n'a plus qu'à solidariser (éventuellement fixement) la seconde pièce P2 à un élément EC, lorsque l'on veut coupler électriquement sa liaison électrique LE à ce dernier (EC). Une telle liaison électrique LE « pré-équipée » d'un dispositif de couplage DC peut, par exemple, constituer un câble électrique d'interconnexion prêt à l'emploi pour assurer le couplage entre un équipement électrique et un élément EC.

On notera également que la première pièce P1 peut être éventuellement constituée de plusieurs (au moins deux) éléments diélectriques différents (l'un d'entre eux pouvant être, éventuellement, de l'air). De même, la seconde pièce P2 peut être éventuellement constituée de plusieurs (au moins deux) éléments conducteurs.

On notera également que le dispositif de couplage DC peut éventuellement se présenter sous la forme d'une structure multicouche, dans laquelle chaque couche comprend des première P1 et seconde P2 pièces et les différentes couches (au moins deux) sont placées les unes au-dessus des autres.

L'invention permet de réaliser des connexions de masse radioélectrique (qui ne nécessitent pas le passage d'un courant continu) entre différents points d'un système, ou entre un équipement électrique ou électronique et une structure, sans devoir recourir à des points de connexions fixes.

## Revendications

1. Dispositif de couplage (DC) pour coupler électriquement une liaison électrique (LE) à un élément (EC) conducteur électriquement, ledit élément (EC) étant une partie d'une carrosserie métallique ou une structure métallique d'un véhicule, **caractérisé en ce qu'**il comprend i) une première pièce (P1) isolante électriquement et présentant une première surface destinée à être placée contre ledit élément (EC), une épaisseur et une valeur diélectrique, et ii) une seconde pièce (P2) conductrice électriquement, présentant une seconde surface placée au moins en partie contre ladite première pièce (P1), et destinée à contacter physiquement ladite liaison électrique (LE) et à définir avec ladite première pièce (P1) et ledit élément (EC) un ensemble de type capacitif ayant une capacité équivalente fonction de ladite seconde surface, de ladite épaisseur et de ladite valeur diélectrique, ladite première pièce (P1) et ladite seconde pièce (P2) sont souples.

2. Dispositif selon la revendication 1, **caractérisé en ce que** ladite première pièce (P1) et ladite seconde pièce (P2) sont planes.

3. Dispositif selon l'une des revendications 1 ou 2 **caractérisé en ce que** ladite seconde surface est plus petite que ladite première surface.

4. Dispositif selon la revendication 3, **caractérisé en ce que** ladite seconde surface est placée entièrement contre ladite première pièce (P1).

5. Dispositif selon l'une des revendications 1 à 4, **caractérisé en ce que** ladite seconde surface de la seconde pièce (P2) est solidarisée fixement, au moins en partie, à ladite première pièce (P1).

6. Agencement comprenant une liaison électrique (LE) comprenant des première (E1) et seconde (E2) extrémités opposées, ladite première extrémité (E1) étant destinée à être connectée à un équipement électrique, **caractérisé en ce qu'**il comprend en outre au moins un dispositif de couplage (DC) selon l'une des revendications précédentes, solidarisé fixement à ladite seconde extrémité (E2) et destiné à être couplé à un élément (EC) conducteur électriquement.

7. Système comprenant un équipement électrique et un élément (EC) conducteur électriquement, **caractérisé en ce qu'**il comprend en outre au moins un agencement selon la revendication 6, couplant ledit équipement électrique audit élément (EC).

8. Système selon la revendication 7, **caractérisé en ce qu'**il constitue un véhicule.

## Patentansprüche

1. Kopplungsvorrichtung (DC) zum elektrischen Koppeln einer elektrischen Verbindung (LE) mit einem elektrisch leitenden Element (EC), wobei das Element (EC) Teil einer Metallkarosserie oder einer Metallstruktur eines Fahrzeugs ist, **dadurch gekennzeichnet, dass** sie i) ein erstes elektrisch isolierendes Teil (P1) mit einer ersten Oberfläche, die dazu bestimmt ist, an dem Element (EC) anzulegen, einer Dicke und einem Dielektrizitätswert und ii) ein zweites elektrisch leitendes Teil (P2) mit einer zweiten Oberfläche, die zumindest teilweise an dem ersten Teil (P1) anliegt und dazu bestimmt ist, die elektrische Verbindung (LE) physisch zu kontaktieren und mit dem ersten Teil (P1) und dem Element (EC) eine Baugruppe kapazitiver Art zu definieren, deren äquivalente Kapazität von der zweiten Oberfläche, der Dicke und dem Dielektrizitätswert abhängt, wobei das erste Teil (P1) und das zweite Teil (P2) flexibel sind.

2. Vorrichtung nach Anspruch 1, **dadurch gekennzeichnet, dass** der erste Teil (P1) und der zweite Teil (P2) flach sind.

3. Vorrichtung nach einem der Ansprüche 1 oder 2, **dadurch gekennzeichnet, dass** die zweite Oberfläche kleiner ist als die erste Oberfläche.

4. Vorrichtung nach Anspruch 3, **dadurch gekennzeichnet, dass** die zweite Oberfläche vollständig am ersten Teil (P1) anliegt.

5. Vorrichtung nach einem der Ansprüche 1 bis 4, **dadurch gekennzeichnet, dass** die zweite Oberfläche des zweiten Teils (P2) zumindest teilweise fest mit dem ersten Teil (P1) verbunden ist.

6. Anordnung mit einer elektrischen Verbindung (LE) mit einem ersten (E1) und einem zweiten (E2) gegenüberliegenden Ende, wobei das erste Ende (E1) zum Anschluss an ein elektrisches Gerät bestimmt ist, **dadurch gekennzeichnet, dass** sie außerdem mindestens eine Kopplungsvorrichtung (DC) gemäß einem der vorhergehenden Ansprüche umfasst, die fest mit dem zweiten Ende (E2) verbunden ist und zum Koppeln mit einem elektrisch leitenden Element (EC) bestimmt ist.

7. System, das ein elektrisches Gerät und ein elektrisch leitfähiges Element (EC) umfasst, **dadurch gekennzeichnet, dass** es außerdem mindestens eine Anordnung gemäß Anspruch 6 umfasst, die das elektrische Gerät mit dem Element (EC) verbindet.

8. System nach Anspruch 7, **dadurch gekennzeichnet, dass** es ein Fahrzeug darstellt.

## Claims

1. Coupling device (DC) for electrically coupling an electrical connection (LE) to an electrically conductive element (EC), said element (EC) being a part of a metal body or a metal structure of a vehicle, **characterized in that** it comprises i) a first electrically insulating part (P1) having a first surface intended to be placed against said element (EC), a thickness and a dielectric value, and ii) a second electrically conductive part (P2), having a second surface placed at least partly against said first part (P1), and intended to physically contact said electrical connection (LE) and to define with said first part (P1) and said element (EC) a capacitive type assembly having an equivalent capacitance depending on said second surface, said thickness and said dielectric value, said first part (P1) and said second part (P2) are flexible.

2. Device according to claim 1, **characterized in that** said first part (P1) and said second part (P2) are planar.

3. Device according to one of claims 1 or 2, **characterized in that** said second surface is smaller than said first surface.

4. Device according to claim 3, **characterized in that** said second surface is placed entirely against said first part (P1).

5. Device according to one of claims 1 to 4, **characterized in that** said second surface of the second part (P2) is fixedly secured, at least in part, to said first part (P1).

6. Arrangement comprising an electrical connection (LE) comprising first (E1) and second (E2) opposite ends, said first end (E1) being intended to be connected to electrical equipment, **characterized in that** it further comprises at least one coupling device (DC) according to one of the preceding claims, fixedly secured to said second end (E2) and intended to be coupled to an electrically conductive element (EC).

7. System comprising electrical equipment and an electrically conductive element (EC), **characterized in that** it further comprises at least one arrangement according to claim 6, coupling said electrical equipment to said element (EC).

8. System according to claim 7, **characterized in that** it constitutes a vehicle.
